# EUROPEAN PATENT SPECIFICATION

(11) **EP 2 382 749 B1**
(45) Date of publication and mention of the grant of the patent: **13.02.2013**
(21) Application number: 08875529.3
(22) Date of filing: 23.12.2008
(51) Int. Cl.: H04L 29/06, H04L 29/08

(54) **ALLOCATION OF A SERVING ENTITY IN A COMMUNICATION NETWORK**
VERGABE EINER VERSORGENDEN ENTITÄT IN EINEM KOMMUNIKATIONSNETZ
ATTRIBUTION D'UNE ENTITÉ DE DESSERTE DANS UN RÉSEAU DE COMMUNICATION

(43) Date of publication of application: 02.11.2011
(73) Proprietor: Nokia Siemens Networks OY, 02610 Espoo (FI)
(72) Inventor: WIEHE, Ulrich, 36251 Bad Hersfeld (DE)
(86) International application number: PCT/EP2008/068230
(87) International publication number: WO 2010/072261

(56) References cited:
- EP-A- 1 973 295
- WO-A-03/075596
- WO-A-2007/138398
- US-A1- 2008 182 575
- US-A1- 2008 313 349
- CHINA MOBILE ET AL: "Proposed text to the load balance for TR 23.8bc (Feasibility Study on IMS Evolution)" 3GPP DRAFT; S2-087209 LOAD_BALANCE_IMS_EVOL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. China; 20081017, 17 October 2008 (2008-10-17), XP050331721 [retrieved on 2008-10-17]

## Description

### Technical field of the invention:

The invention relates to a method, a subscription entity, a serving entity and computer program product for allocating a serving entity for a user.

### Background of the invention:

Within the IP (Internet Protocol) Multimedia Subsystem (IMS) as defined by 3^{rd} Generation Partnership Project (3GPP) Session Initiation Protocol (SIP) defined by Internet Engineering Task Force (IETF) is used for controlling communication. SIP is an application-layer control protocol for creating, modifying, and terminating sessions with one or more participants. These sessions may include Internet multimedia conferences, Internet telephone calls, and multimedia distribution. Members in a session can communicate via multicast or via a mesh of unicast relations, or a combination of these. Diameter protocol has been defined by IETF and is intended to provide an Authentication, Authorization and Accounting (AAA) framework for applications such as network access or IP mobility.

Document WO 03075596 A1 discloses technique in which there is allocated one of a plurality of serving call state control functions to a subscriber, the technique including: receiving load information from at least one serving call state control function; and determining a serving call state control function for the subscriber in dependence on the received load information, wherein the receiving step includes receiving the load information during subscriber registration in a signal received from a serving call state control function to an interrogating call state control function.

The growth of operator business means also extending the network with new serving entities (such as IMS S-CSCF) to fulfill the increased number of users and/or more intensive service usages and also to provide service continuity when one of the session control servers (e.g. S-CSCF) is temporarily or permanently out of order, or under maintenance.

The object of the invention is to overcome certain drawbacks in current serving entity selection procedure.

### Summary of the invention

The present invention overcomes the above problem according to the appended claims, by providing a method, subscription entity and computer program product comprising receiving (SAR) from a serving entity (S-CSCF) an indication indicating that the serving entity is not the most preferred serving entity for serving a user, storing the indication, receiving from a control entity (I-CSCF) a request (UAR) associated with the user, transmitting a response (UAA) to the request, and, including in the response (UAA) information for selecting a serving entity (S-CSCF) for the user, if the indication indicating that the serving entity is not the most preferred serving entity for serving the user has been stored for the user.

The information for selecting a serving entity (S-CSCF) for the user comprises (IMS) server capabilities and can comprise indication of capabilities which a serving entity (S-CSCF) to be selected for the user should support.

Further, it is provided a method, control entity and computer program product comprising receiving (UAA) from a subscription entity (HSS) information for selecting a serving entity (S-CSCF) for a user, selecting a serving entity (S-CSCF) for the user, wherein the selecting comprises selecting based on the information for selecting a serving entity, sending a request (SIP) to the serving entity (S-CSCF), and, including in the request (SIP) an indication indicating that the selected serving entity is not the most preferred serving entity for serving the user, if the most preferred serving entity was not selected.

The information for selecting a serving entity (S-CSCF) for the user can be (IMS) server capabilities.

The selecting can comprise to determining the most preferred serving entity for the user and to select the most preferred serving entity if that is not one of unavailable or highly loaded, and to select another serving entity if the most preferred serving entity could not be selected, and wherein the including comprises to include the indication indicating that the selected serving entity is not the most preferred serving entity if the other serving entity is selected.

Finally it is provided a method, serving entity and computer program product comprising receiving a session initiation protocol request associated with a user, detecting in the request an indication indicating that the serving entity is not the most preferred serving entity for serving the user, and, transmitting, if detecting the indication in the request, to a subscription server (HSS) an indication indicating that the serving entity is not the most preferred serving entity for serving a user.

The transmitting can comprise transmitting in a server assignment request (SAR) Diameter signal.

Embodiment of the present invention may have one or more of following advantages.

An I-CSCF does not need to always request capabilities and always process capabilities to check whether S-CSCF re-selection should be done.

A more preferred S-CSCF can be re-selected for a user.

### Description of drawings

Figure 1 illustrates basic IMS registration process relevant for the invention.
Figure 2 illustrates an aspect of the invention in which an indication that the currently selected S-CSCF is not the most preferred S-CSCF is transmitted and stored in the IMS network.
Figure 3 illustrates an aspect of the invention in which an indication that the currently selected S-CSCF is not the most preferred S-CSCF is detected an S-CSCF re-selection may be done.
Figure 4 illustrates example internal structure of network elements relevant for implementing aspects of the invention.
Figures 5 - 7 illustrate example process that can be implemented by a control entity, a serving entity and a subscription entity for implementing aspects of the invention.

### Detailed description of the invention

Different types network entities and functions exist in the IMS network. Call Session Control Functions (CSCF) implement a session control function in SIP layer. The CSCF can act as Proxy CSCF (P-CSCF), Serving CSCF (S-CSCF) or Interrogating CSCF (I-CSCF). The P-CSCF is the first contact point for the User Equipment (UE) within the IMS; the S-CSCF handles the session states in the network; the I-CSCF is mainly the contact point within an operator's network for all IMS connections destined to a subscriber of that network operator, or a roaming subscriber currently located within that network operator's service area.

The functions performed by the I-CSCF are, for example, assigning an S-CSCF to a user performing a SIP registration and routing SIP requests received from another network towards the S-CSCF. The S-CSCF can perform the session control services for the UE. It maintains a session state as needed by the network operator for support of the services and may be acting as Registrar, i.e. it accepts registration requests and makes its information available through the location server (e.g. HSS). The S-CSCF is the central point to users that are hosted by this S-CSCF. The S-CSCF can provide services to registered and unregistered users when it is assigned to these users. This assignment can be stored in the Home Subscriber Server (HSS).

The HSS is the master database for a given user. It is the entity containing the subscription-related information to support the network entities actually handling calls/sessions. As an example, the HSS provides support to the call control servers (CSCFs) in order to complete the routing/roaming procedures by solving authentication, authorisation, naming/addressing resolution, location dependencies, etc.

The HSS can be responsible for holding the following user related information:
- User Identification, Numbering and addressing information
- User Security information: Network access control information for authentication and authorization, such as password information
- User Location information at inter-system level: the HSS supports the user registration, and stores inter-system location information, etc.
- User profile information.

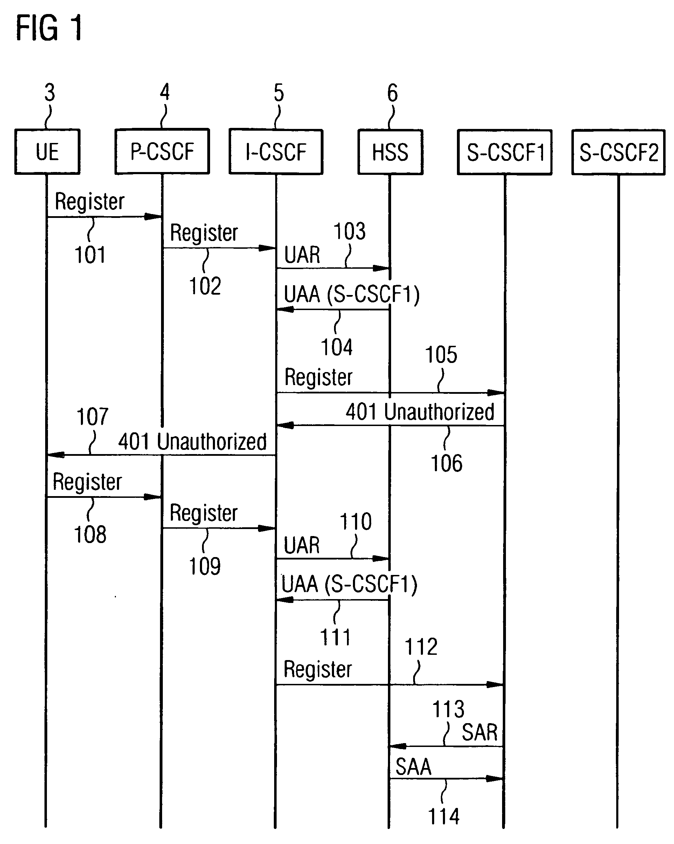

Before being able to establish a communication session, a user has to register to the IMS network. The basic IMS registration procedure is described in Fig 1 and subclause 5.2.2.3 of 3GPP specification TS 23.228.

The S-CSCF selection can be conducted by the Interrogating-CSCF (I-CSCF) during initial registration procedure for the registered user or by receiving a terminating request for an unregistered user. The I-CSCF can use server capabilities of the IMS user or any other information like location information, priority, load, etc to decide which S-CSCF is preferred to be selected for the user. However, it may happen that the preferred S-CSCF is not available at the moment of S-CSCF selection, therefore another S-CSCF must be selected. The I-CSCF may also re-select another S-CSCF during re-registration procedure when the previously selected S-CSCF is not available.

An S-CSCF re-selection procedure allows for IMS network to re-route traffic (e.g. registration messages) to an alternative (less preferred) S-CSCF when the currently selected (most preferred) S-CSCF is not available (e.g. due to maintenance or error). However subscribers registered to the alternative (less preferred) S-CSCF are then to remain there, even when the most preferred S-CSCF comes to working state again. Subscribers remain in the alternative S-CSCF until they de-register from the network which may be quite a long time, since many users do not switch off their phone even at night, and remain registered for days. This means that after restart of the most preferred S-CSCF basically no traffic is being directed to that S-CSCF (except new initial registrations, e.g. when a subscriber switches on his/her phone). In other words, if due to failure of the preferred S-CSCF a backup S-CSCF is selected for an IMS user, the IMS user cannot be re-assigned back to the preferred S-CSCF after the preferred S-CSCF is recovered.

Similar problem occurs when a new S-CSCF is deployed to the network. To use network resources effectively, traffic load shall be directed to the new S-CSCF in reasonable timeframe.

In this section the S-CSCF assignment process for a user is described in more detail. When a User Equipment (UE) attaches and makes itself available for access to IMS services by explicitly registering in the IMS, an S-CSCF shall be assigned to serve the UE. The selection of an S-CSCF is performed in the I-CSCF. For example, the following information can be used in the selection of the S-CSCF:
- Required capabilities for user services, provided by the HSS.
- Operator preference on a per-user basis, provided by the HSS.
- Capabilities of individual S-CSCFs in the home network. This is internal information within the operator's network and may be used in the S-CSCF selection.
- Topological information of where the S-CSCF is located. This is internal information within the operator's network and may be used in the S-CSCF selection.

In order to support the S-CSCF selection described above and to allow the S-CSCF to perform its tasks, the Cx interface must support transferring following information:
- transfer of CSCF-UE security parameters from HSS to CSCF. The security parameters allow the CSCF and the UE to communicate in a trusted and secure way.
- transfer of service parameters of the subscriber from HSS to CSCF. This may include e.g. service parameters, Application Server (AS) address, triggers, information on subscribed media etc. The information on subscribed media can be provided in the form of a profile identifier; details of the allowed media parameters associated with the profile identifier are configured in the S-CSCF.
- transfer of CSCF capability information from HSS to CSCF. This may include e.g. supported service set, protocol version numbers etc.
- transfer of session signalling transport parameters from CSCF to HSS. The HSS stores the signalling transport parameters and they are used for routing mobile terminated sessions to the Serving-CSCF. The parameters may include e.g. IP-address and port number of CSCF, transport protocol etc. The information mentioned above shall be transferred before the CSCF is able to serve the user. It shall also be possible to update this information while the CSCF is serving the user, for example if new services are activated for the user.

The basic IMS registration procedure and signaling flow has been presented the upper part of Fig 1. To initiate a registration, UE 3 sends a register signal, e.g. SIP REGISTER message to a P-CSCF 4 in step 101. The register signal can include an identity of a user operating the UE 3 and a domain name of a home network of the user. Upon receipt of the register signal the P-CSCF 4 can examine the home domain name to identify the entry point into the home network for forwarding the register signal, in step 102. The entry point into the home network is an I-CSCF 5. The I-CSCF 5 can contact a HSS 6, e.g. by sends a User Authentication Request (UAR) Diameter signal in step 103. The UAR signal can include the user identity and the home domain name. The HSS 6 can send User Authorization Answer (UAA) Diameter signal to the I-CSCF 5 in step 104. The UAA signal can include either the name of the serving call state control function (S-CSCF that has already been assigned for the user) or IMS server capabilities which a possible S-CSCF shall support (by mandatory or optional means) in order to be able to serve the given user. In the example message flow, in step 104, the signal includes the name of S-CSCF1. Based on the information received from the HSS 6, the I-CSCF 5 can select a suitable S-CSCF 1 (if an S-CSCF has already been assigned then the I-CSCF 5 selects that S-CSCF) and can forward the register signal to it in step 105. Depending on the applied authentication scheme, the S-CSCF 1 may generate a challenge and send it toward the UE 3 in a 401 Authentication Required SIP response (steps 106-107). The S-CSCF 1 may send information to the HSS 6 in order to enable the HSS 6 to store selected S-CSCF related information, such as S-CSCF 1 address, however, this is not shown on Fig 1. The UE 3 can generate an answer to the authentication challenge and include the answer into a new register signal that traverses via the P-CSCF 4 to the I-CSCF 5 (steps 108-109). The I-CSCF 5 can query the HSS 6 (steps 110-111) and forward the register signal to the S-CSCF 1 in step 112. The S-CSCF 1 can authenticate the user based on the received answer for the previously sent challenge and can send Server Assignment Request (SAR) Diameter signal to the HSS 6 (message 113), requesting to assign the given S-CSCF (here S-CSCF 1) for the user. The HSS 6 can store the S-CSCF 1 name as the assigned S-CSCF and can send Server Assignment Answer (SAA) Diameter signal to the S-CSCF 1 (message 114).

After successful registration to the IMS network, periodic application level re-registration can be initiated by the UE either to refresh an existing registration or in response to a change in the registration status of the UE. A re-registration procedure may also be initiated when the capabilities of the UE have changed. Re-registration can follow the same process as defined above for initial registration, e.g. SIP REGISTER request is used etc. When initiated by the UE, based on the registration time established during the previous registration, the UE can keep a timer shorter than the registration related timer in the network. If the UE does not re-register, any active sessions may be deactivated.

According to an embodiment of the invention, when selecting a "less preferred S-CSCF" for a user by an I-CSCF, for example because the preferred S-CSCF is not available, the I-CSCF can indicate to the less preferred S-CSCF that it is less preferred. The less preferred S-CSCF can forward the corresponding information to the HSS for example as part of Cx-SAR procedure. The HSS can store this information as part of S-CSCF assignment of the user. According to an aspect of the invention, when the HSS receives a subsequent request for user related data of the same user (for example in Cx-UAR procedure), the HSS can return current S-CSCF name and IMS server capabilities of the user. Capabilities can be returned by the HSS although not requested from the I-CSCF, but due to the stored information indicating that the current S-CSCF is less preferred.

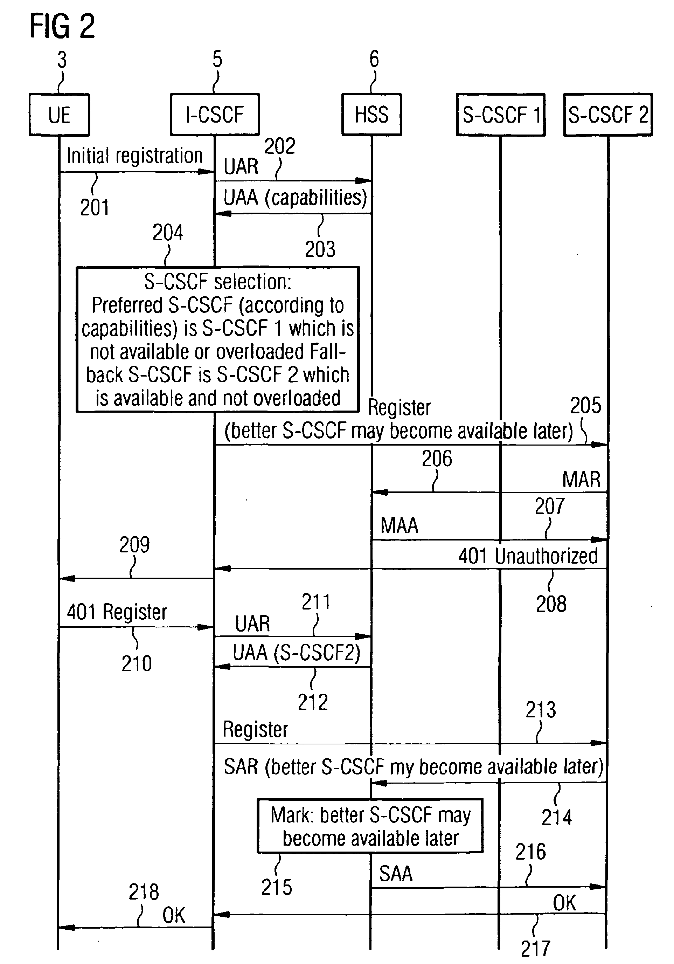

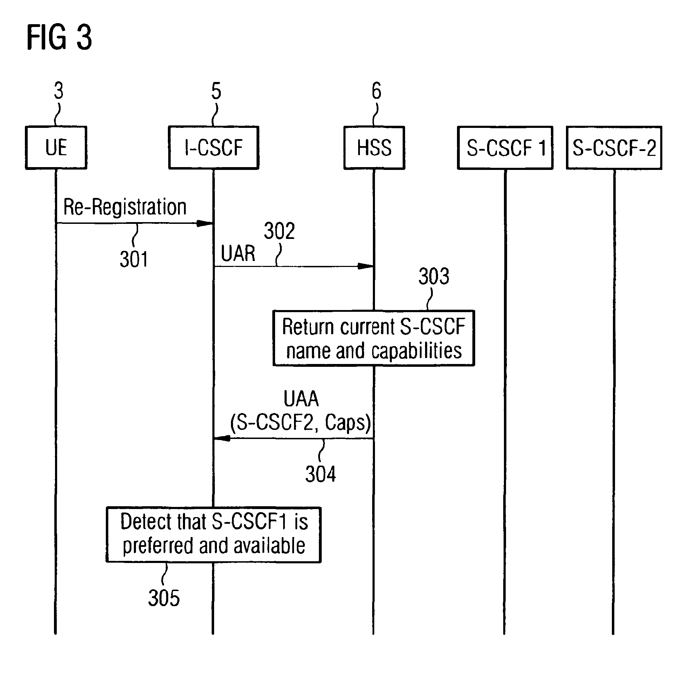

One aspect of the invention is here explained with help of Figures 2 and 3. Implementation of this aspect can affect functionality of the I-CSCF, the HSS, and the S-CSCF. This aspect can extend the SIP REGISTER message sent from the I-CSCF to the S-CSCF and the Cx-SAR command sent from S-CSCF to HSS. When the I-CSCF selects an S-CSCF that is not the preferred S-CSCF for a user, the I-CSCF can indicate to the selected (but not preferred) S-CSCF that a better S-CSCF may become available later. Reasons for not selecting the preferred S-CSCF may be, for example, because the preferred S-CSCF is not available or is highly loaded or any other reason why it cannot be selected at the moment.

The S-CSCF can forward this information with Cx-SAR to an HSS which in turn can store the information against the current S-CSCF name for the user.

A detection phase can then be triggered by the HSS which - based on the stored information (e.g. "better S-CSCF may become available") - can return current S-CSCF name and additionally IMS server capabilities within a Cx-UAA response after receiving a Cx-UAR request from the I-CSCF. The I-CSCF can then calculate the best suited S-CSCF based on capabilities and checks whether it is now selectable (for example available and not highly loaded). If the S-CSCF can now be selected, the I-CSCF may trigger S-CSCF re-selection procedure.

The indication transmitted between the I-CSCF and the S-CSCF can indicate for example that the currently selected S-CSCF is not the most preferred S-CSCF for a user. Or it can indicate that a more preferred S-CSCF may become later available for a user. Implementation of the indication can be done in many ways. Between the I-CSCF and the S-CSCF, the indication can be a new SIP header or parameter in SIP, or an additional coding definition for an existing parameter/header. Between the S-CSCF and the HSS the indication can be, for example, a new Diameter Attribute Value Pair (AVP) or an extension to some existing AVP structure. As the protocols used between the I-CSCF and the S-CSCF, and between the S-CSCF and the HSS can be different, the indication received from the I-CSCF may not be transmitted transparently by the S-CSCF to the HSS, but the S-CSCF can map the received indication into another format/protocol for the HSS. The HSS can store an indication that currently selected S-CSCF is not the most optimal/preferred for a user as part of the other information stored for the user.

Fig 2 shows an example message flow for transmitting and storing an indication that currently selected S-CSCF is not the most preferred S-CSCF. Signals 201 - 203 correspond to registration procedures of a user where in signal 203 the HSS returns IMS server capabilities of the user to the I-CSCF since no S-CSCF is currently been selected to serving the user who initiated the registration. In step 204, the I-CSCF can determine based on the received IMS server capabilities and other information available in the I-CSCF, such as capabilities of S-CSCF in the IMS network of the operator, a most preferred S-CSCF for serving the user. The result may be one or more specific S-CSCF. The I-CSCF can check the availability of the most preferred S-CSCF(s) for serving the user. However, in the end the I-CSCF can be forced to select a less preferred S-CSCF (S-CSCF 2 in Fig 2) for the user if, for example, the preferred S-CSCF is not available or is highly loaded.

In signal 205, the I-CSCF can send a signaling message, for example a SIP request, such as SIP REGISTER request to the less preferred S-CSCF which has been selected to server the user. The signal can include the indication that the currently selected S-CSCF (to which the signal is sent) is not the most preferred S-CSCF for serving the user, and/or that a better S-CSCF may become available later.

In this example signals 208 - 213 can correspond to signals 106 - 112 in Fig 1 which are part of normal registration procedures. In 211, the HSS has not yet stored the information that a better S-CSCF may become available later and therefore in step 212 the HSS does not return capabilities in addition to the S-CSCF name.

In 214, based on the received information in signal 205 that a better S-CSCF may become available later, the S-CSCF can forward the corresponding information to the HSS, for example, in a Diameter request, such as Cx-SAR. In 215, the HSS can store the information "better S-CSCF may become available later" against the S-CSCF name. Storing the information in the HSS can be done per each registering user. Signals 216 - 218 can follow existing registration procedures.

In Fig 3, signal 301 can be a normal re-registration request (for example SIP REGISTER) from the user to which an S-CSCF has already been assigned. Signal 302, can be sent by the I-CSCF to the HSS for requesting a name of the currently assigned S-CSCF. In step 303, the HSS can detect that for this user the HSS has stored the information "better S-CSCF may become available later" against the current S-CSCF (for example, as explained in Fig 2). In signal 304, the HSS can return the IMS server capabilities of the user in addition to the current S-CSCF name to the I-CSCF. In 305, the I-CSCF, when detecting the current S-CSCF name and in addition also the IMS server capabilities, can determine the best suited S-CSCF based on the received capabilities and other criteria as explained before. The reception of both IMS server capabilities and S-CSCF name from the HSS together can be considered by the I-CSCF an indication that a better S-CSCF may be available and/or that an S-CSCF determination procedure should be performed by the I-CSCF again. If the result of the S-CSCF determination is that another than currently assigned S-CSCF is to be selected, and that S-CSCF is also now selectable (i.e. available, not overloaded), the I-CSCF can trigger S-CSCF re-selection procedure.

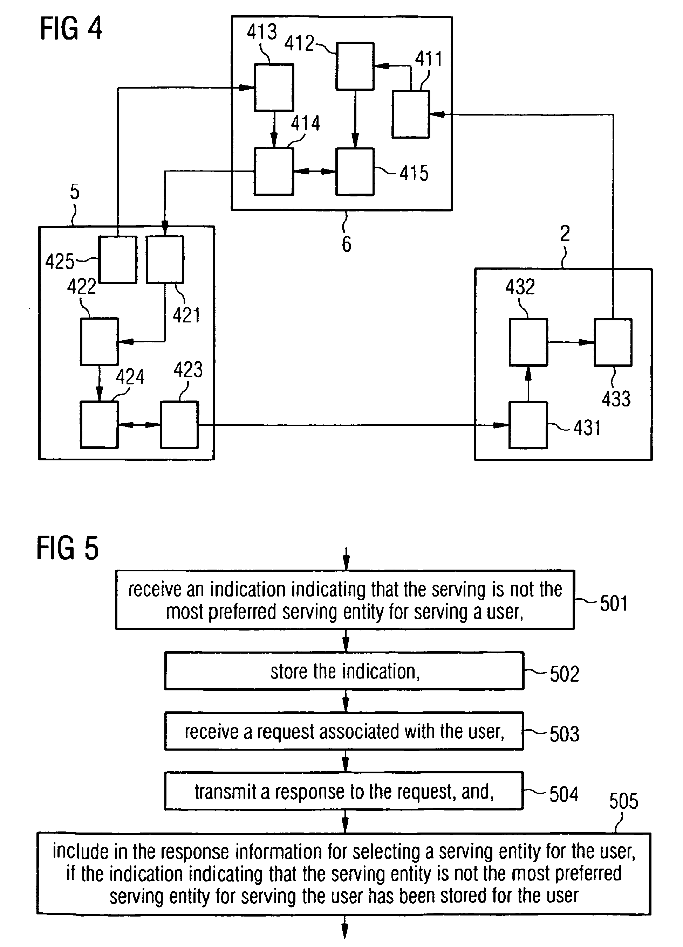

Figure 5 presents example process for implementing process for a subscription entity according to aspects of the invention. In step 501 an indication indicating that the serving entity is not the most preferred serving entity for serving a user is received. In step 502, the indication is stored, in step 503 a request associated with the user is received. A response to the request, is transmitted in step 504. Finally in step 505 information for selecting a serving entity for the user is included in the response, if the indication indicating that the serving entity is not the most preferred serving entity for serving the user has been stored for the user.

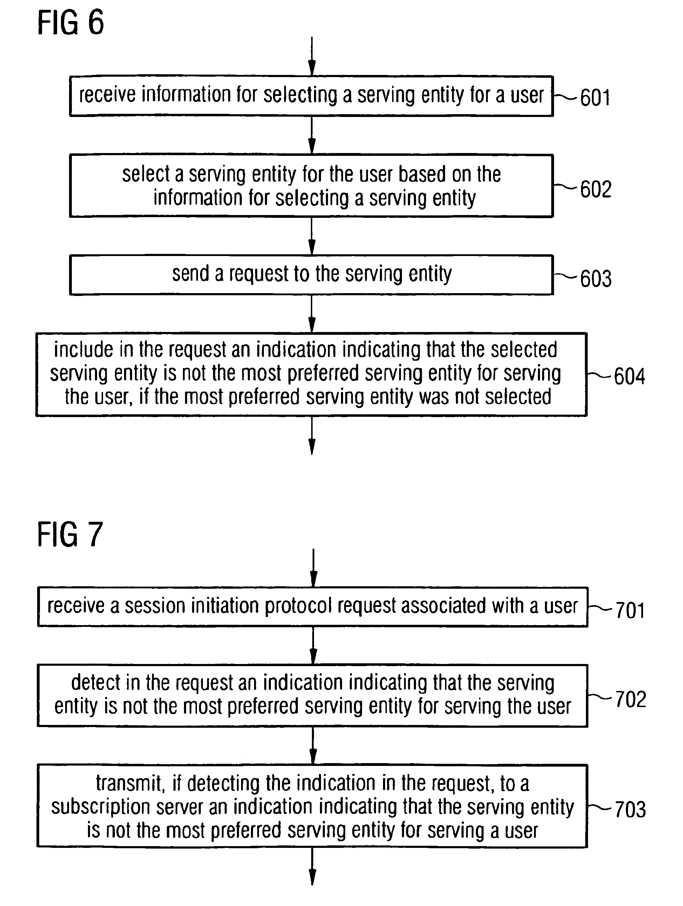

Figure 6 presents example process for implementing process for a control entity according to aspects of the invention. In step 601, information for selecting a serving entity for a user is received. In step 602, a serving entity for the user is selected based on the information for selecting a serving entity. A request to the (selected) serving entity is sent in step 603, and finally in step 604, an indication indicating that the selected serving entity is not the most preferred serving entity for serving the user is included in the request, if the most preferred serving entity was not selected

Figure 7 presents example process for implementing process for a serving entity according to aspects of the invention. In step 701 a session initiation protocol request associated with a user is received. In step 702 an indication indicating that the serving entity is not the most preferred serving entity for serving the user is detected in the request, and in step 703, an indication indicating that the serving entity is not the most preferred serving entity for serving a user is transmitted to a subscription server, if the indication in the request was detected.

Figure 4 illustrates example implementations and internal structures of related network elements which may implement aspects of the invention. A subscription entity 6, such as HSS, can comprise a first receiving unit 411 configured to receive an indication indicating that a currently assigned serving entity is not the most preferred serving entity for serving a user. The first receiving unit 411 can receive Diameter signaling and can receive signals from serving entities, such as S-CSCFs, for example form the S-CSCF that has been assigned for the user. The subscription entity 6 can have a storing unit 412 configured to store information that a currently assigned S-CSCF is not the most preferred S-CSCF based on the indication received by the receiving unit 411. The information can be stored by the storing unit 412 as part of registration information of the user and associated with the currently assigned S-CSCF for the user. A second receiving unit 413 can be configured to receive requests, such as Diameter requests, associated with users of the communication network. A second receiving unit 413 can be configured to receive from a control entity, such as I-CSCFs. The subscription entity 6 can comprise a transmitting unit 414 configured to transmit responses (such as Diameter UAAs) to the requests received by the second receiving unit 413, and an including unit 415 configured to include in a response transmitted by transmitting unit 414 information for selecting a serving entity for the user. The including unit 415 can be configured to include/embed the information for selecting a serving entity if the indication indicating that the currently assigned serving entity is not the most preferred serving entity for serving the user has been stored by the storing unit 412. The including unit 415 can be configured to embed (IMS) server capabilities as the information for selecting a serving entity.

A control entity 5, such as I-CSCF, can comprise, a requesting unit 425 configured to request user specific information, for example from a subscription entity. The control entity 5 can have a receiving unit 421 configured to receive information for selecting a serving entity (such as S-CSCF) for a user. The receiving unit 421 can be configured to receive according to Diameter protocol, for example, from a subscription entity (such as HSS). The receiving unit 421 can be configured to receive IMS server capabilities. The control entity 5 can have a selecting unit 422 configured to select a serving entity (S-CSCF) for the user. The selecting unit 422 can be configured to use the information for selecting a serving entity in the selection, in addition to possible other information available. A sending unit 423 can be configured to send request (such as SIP requests) to serving entities (S-CSCF), and including unit 424 can be configured to include/embed in the request an indication indicating that the selected serving entity is not the most preferred serving entity for serving the user, if the most preferred serving entity was not selected by the selecting unit 422.

A serving entity 2, such as S-CSCF, can comprise a receiving unit 431 configured to receive requests, such as SIP requests) associated with users of the communication system. A serving entity 2 can have a detecting unit 432 to detect if an indication indicating that the serving entity is not the most preferred serving entity for serving the user is include/embedded in the request received by the receiving unit 432. A transmitting unit 433 can be configured to transmit, for example to a subscription server (such as HSS) an indication indicating that the serving entity is not the most preferred serving entity for serving a user, if the corresponding indication is detected in the request by the detecting unit 432.

All units described above may be implemented for example using microprocessors, chips and/or other electrical components and/or by software.

The subscription entity can implement functions of a home subscriber server of an internet protocol multimedia subsystem.

A subscription entity, a serving entity and a control entity may be physically implemented in a switch, router, server or other hardware platform or electronic equipment which can support data transmission and processing tasks, or can be implemented as a component of other existing device.

The invention is not limited to IMS networks, but may also be applied in other networks having similar subscription/register entity role as HSS, control entity role as I-CSCF and serving entity role than S-CSCF and where serving entities are capable of providing services to users of the network. Therefore, the S-CSCF is only used here as an example of a serving entity, the I-CSCF as an example of the control entity and the HSS as an example of a subscription/register entity. Functions of the subscription/register entity (HSS), the control entity (I-CSCF) and the serving entity (S-CSCF) described above may be implemented by code means, as software, and loaded into memory of a computer.

## Claims

1. A subscription entity (6) comprising
means for receiving (411) from a serving entity (2) an indication indicating that the serving entity (2) is not the most preferred serving entity for serving a user (3),
means for storing (412) the indication,
means for receiving (413) from a control entity (5) a request associated with the user,
means for transmitting (414) a response to the request, and,
means for including (415) in the response information for selecting another serving entity (2) for the user, if the indication indicating that the serving entity (2) is not the most preferred serving entity (2) for serving the user has been stored for the user.

2. The subscription entity (6) of claim 1, wherein the information for selecting a serving entity (2) for the user comprises server capabilities.

3. The subscription entity (6) of claim 2 wherein the server capabilities comprises indication of capabilities which a serving entity (2) to be selected for the user should support.

4. A method, performed in a subscription entity (6), for selecting a serving entity (2) in a communication system, comprising
receiving (501), from a serving entity (2), an indication indicating that the serving entity is not the most preferred serving entity for serving a user,
storing (502) the indication,
receiving (503), from a control entity (5), a request associated with the user,
transmitting (504) a response to the request, and,
including (505) in the response information for selecting another serving entity (2) for the user, if the indication indicating that the serving entity is not the most preferred serving entity for serving the user has been stored for the user.

5. A control entity (5) comprising,
means for receiving (421) from a subscription entity (6) information for selecting a serving entity (2) for a user (3),
means for selecting (422) a serving entity (2) for the user, wherein the selecting comprises selecting based on the information for selecting a serving entity,
means for sending (423) a request (205) to the selected serving entity (2), **characterized in that** the control entity (5) further comprises,
means for including (424) in the request (205) an indication indicating that the selected serving entity (2) is not the most preferred serving entity for serving the user, if the most preferred serving entity was not selected by the means for selecting (422).

6. The control entity (5) of claim 5, wherein the information for selecting a serving entity (2) for the user comprises server capabilities.

7. The control entity (5) of claim 5 or 6, wherein the means for selecting is configured to determine the most preferred serving entity for the user and to select the most preferred serving entity if that is not one of unavailable or highly loaded,
and to select another serving entity if the most preferred serving entity could not be selected, and
wherein the including means is configured to include the indication indicating that the selected serving entity is not the most preferred serving entity if the other serving entity is selected.

8. A method, performed in a control entity (5), for selecting a serving entity in a communication system, comprising,
receiving (203, 601), from a subscription entity (6), information for selecting a serving entity (2) for a user,
selecting (204, 602) a serving entity (2) for the user, wherein the selecting comprises selecting based on the information for selecting a serving entity
sending a request (205, 603) to the selected serving entity (2), **characterized in that** the method further comprises,
including (604) in the request (205) an indication indicating that the selected serving entity (2) is not the most preferred serving entity for serving the user, if the most preferred serving entity was not selected in the selecting step.

9. The method of claim 8 wherein selecting (204, 602) comprises determining the most preferred serving entity (2) for the user and selecting the most preferred serving entity if that is not one of unavailable or highly loaded,
and selecting another serving (2) entity if the most preferred serving entity could not be selected, and
wherein the including (604) comprises including the indication indicating that the selected serving entity is not the most preferred serving entity if the other serving entity is selected.

10. A serving entity (2), comprising:
means for receiving (431), from a control entity, a session initiation protocol request associated with a user (3), **characterized in that** the serving entity (2) further comprises,
means for detecting (432) in the request an indication indicating that the serving entity is not the most preferred serving entity for serving the user, and,
means for transmitting (433), if detecting the indication in the request, to a subscription server (6) an indication indicating that the serving entity is not the most preferred serving entity for serving a user.

11. The serving entity (2) of claim 10, wherein the transmitting comprises transmitting in a server assignment request, SAR, Diameter signal.

12. A method, performed in a serving entity (2), for selecting a serving entity (2), comprising:
receiving (701), from a control entity (5), a session initiation protocol request associated with a user (3), **characterized in that** the method further comprises,
detecting (702) in the request an indication indicating that the serving entity (2) is not the most preferred serving entity for serving the user, and,
transmitting (703), if detecting the indication in the request, to a subscription server (6) an indication indicating that the serving entity is not the most preferred serving entity for serving a user.

13. A computer program product comprising code means adapted to produce all the steps of any one of claims 4, 8, 9 or 12 when loaded into the memory of a computer.

14. A method for selecting a serving entity (2) connectable to a communication system, comprising
selecting (204) by a controlentity (5), a serving entity (2) for a user (3), wherein the selecting comprises selecting based on information received from a subscription entity (6), for selecting a serving entity,
**characterized in that** the method further comprises,
transmitting (205), from the control entity (5) to the selected serving entity (2), a request including an indication indicating that the selected serving entity is not the most preferred serving entity for serving the user, if the most preferred serving entity was not selected in the selecting step,
detecting (303), by the selected serving entity (2), in connection with said request associated with the user the indication indicating that the selected serving entity is not the most preferred serving entity for serving the user, and
transmitting (304), from the selected serving entity (2) to the subscription entity (6), on indication indicating that the selected serving entity (2) is not the most preferred serving entity for serving the user in response to said detecting the indication in said request.

15. The method of claim 14 wherein the information for selecting a serving entity for the user comprises server capabilities.

## Patentansprüche

1. Abonnemententität (6), die Folgendes umfasst:
ein Mittel, um von einer bedienenden Entität (2) eine Angabe zu empfangen (411), die angibt, dass die bedienende Entität (2) nicht die am meisten bevorzugte bedienende Entität zum Bedienen eines Anwenders (3) ist,
ein Mittel, um die Angabe zu speichern (412),
ein Mittel, um von einer Steuerentität (5) eine dem Anwender zugeordnete Anforderung zu empfangen (413),
ein Mittel, um eine Antwort auf die Anforderung zu senden (414), und
ein Mittel, um in die Antwort Informationen zum Auswählen einer anderen bedienenden Entität (2) für den Anwender aufzunehmen (415), falls für den Anwender die Angabe gespeichert worden ist, die angibt, dass die bedienende Entität (2) nicht die am meisten bevorzugte bedienende Entität (2) zum Bedienen des Anwenders ist.

2. Abonnemententität (6) nach Anspruch 1, wobei die Informationen zum Auswählen einer bedienenden Entität (2) für den Anwender Serverfähigkeiten umfassen.

3. Abonnemententität (6) nach Anspruch 2, wobei die Serverfähigkeiten eine Angabe von Fähigkeiten, die eine bedienende Entität (2), die für den Anwender ausgewählt werden soll, unterstützen sollte, umfassen.

4. Verfahren, das in einer Abonnemententität (6) ausgeführt wird, um eine bedienende Entität (2) in einem Kommunikationssystem auszuwählen, wobei das Verfahren Folgendes umfasst:
Empfangen (501) einer Angabe, die angibt, dass die bedienende Entität nicht die am meisten bevorzugte bedienende Entität zum Bedienen eines Anwenders ist, von einer bedienenden Entität (2),
Speichern (502) der Angabe,
Empfangen (503) einer dem Anwender zugeordneten Anforderung von einer Steuerentität (5),
Senden (504) einer Antwort auf die Anforderung, und
Aufnehmen (505) von Informationen zum Auswählen einer anderen bedienenden Entität (2) für den Anwender in die Antwort, falls für den Anwender die Angabe gespeichert worden ist, die angibt, dass die bedienende Entität nicht die am meisten bevorzugte bedienende Entität zum Bedienen des Anwenders ist.

5. Steuerentität (5) die Folgendes umfasst:
ein Mittel, um von einer Abonnemententität (6) Informationen zum Auswählen einer bedienenden Entität (2) für einen Anwender (3) zu empfangen (421),
ein Mittel, um eine bedienende Entität (2) für den Anwender auszuwählen (422), wobei das Auswählen das Auswählen auf der Grundlage der Informationen zum Auswählen einer bedienenden Entität umfasst,
ein Mittel, um eine Anforderung (205) an die ausgewählte bedienende Entität (2) zu senden (423), **dadurch gekennzeichnet, dass** die Steuerentität (5) ferner Folgendes umfasst:
ein Mittel, um in die Anforderung (205) eine Angabe aufzunehmen (424), die angibt, dass die ausgewählte bedienende Entität (2) nicht die am meisten bevorzugte bedienende Entität zum Bedienen des Anwenders ist, falls die am meisten bevorzugte bedienende Entität durch das Mittel zum Auswählen (422) nicht ausgewählt wurde.

6. Steuerentität (5) nach Anspruch 5, wobei die Informationen zum Auswählen einer bedienenden Entität (2) für den Anwender Serverfähigkeiten umfassen.

7. Steuerentität (5) nach Anspruch 5 oder 6, wobei das Mittel zum Auswählen zum Bestimmen der am meisten bevorzugten bedienenden Entität für den Anwender und zum Auswählen der am meisten bevorzugten bedienenden Entität, falls diese nicht nicht verfügbar oder hoch belastet ist, konfiguriert ist,
und zum Auswählen einer anderen bedienenden Entität, falls die am meisten bevorzugte bedienende Entität nicht ausgewählt werden konnte, konfiguriert ist, und
wobei das Aufnahmemittel dafür konfiguriert ist, die Angabe, die angibt, dass die ausgewählte bedienende Entität nicht die am meisten bevorzugte bedienende Entität ist, aufzunehmen, falls die andere bedienende Entität ausgewählt wird.

8. Verfahren, das in einer Steuerentität (5) ausgeführt wird, um eine bedienende Entität in einem Kommunikationssystem auszuwählen, wobei das Verfahren Folgendes umfasst:
Empfangen (203, 601) von Informationen zum Auswählen einer bedienenden Entität (2) für einen Anwender von einer Abonnemententität (6),
Auswählen (204, 602) einer bedienenden Entität (2) für den Anwender, wobei das Auswählen das Auswählen auf der Grundlage der Informationen zum Auswählen einer bedienenden Entität umfasst,
Senden einer Anforderung (205, 603) an die ausgewählte bedienende Entität (2), **dadurch gekennzeichnet, dass** das Verfahren ferner Folgendes umfasst:
Aufnehmen (604) einer Angabe, die angibt, dass die ausgewählte bedienende Entität (2) nicht die am meisten bevorzugte bedienende Entität zum Bedienen des Anwenders ist, in die Anforderung (205), falls die am meisten bevorzugte bedienende Entität in dem Auswahlschritt nicht ausgewählt wurde.

9. Verfahren nach Anspruch 8, wobei das Auswählen (204, 602) das Bestimmen der am meisten bevorzugten bedienenden Entität (2) für den Anwender und das Auswählen der am meisten bevorzugten bedienenden Entität, falls diese nicht nicht verfügbar oder hoch belastet ist,
und das Auswählen einer anderen bedienenden Entität (2), falls die am meisten bevorzugte bedienende Entität nicht ausgewählt werden konnte, umfasst, und
wobei das Aufnehmen (604) das Aufnehmen der Angabe, die angibt, dass die ausgewählte bedienende Entität nicht die am meisten bevorzugte bedienende Entität ist, falls die andere bedienende Entität ausgewählt wird, umfasst.

10. Bedienende Entität (2), die Folgendes umfasst:
ein Mittel, um von einer Steuerentität eine Sitzungsinitiierungsprotokoll-Anforderung, die einem Anwender (3) zugeordnet ist, zu empfangen (431), **dadurch gekennzeichnet, dass** die bedienende Entität (2) ferner Folgendes umfasst:
ein Mittel, um in der Anforderung eine Angabe zu detektieren (432), die angibt, dass die bedienende Entität nicht die am meisten bevorzugte bedienende Entität zum Bedienen des Anwenders ist, und
ein Mittel, um an einen Abonnementserver (6) eine Angabe zu senden (433), die angibt, dass die bedienende Entität nicht die am meisten bevorzugte bedienende Entität zum Bedienen eines Anwenders ist, falls die Angabe in der Anforderung detektiert wird.

11. Bedienende Entität (2) nach Anspruch 10, wobei das Senden das Senden in einem Serverzuweisungsanforderungs-Durchmessersignal, SAR-Durchmessersignal, umfasst.

12. Verfahren, das in einer bedienenden Entität (2) ausgeführt wird, um eine bedienende Entität (2) auszuwählen, wobei das Verfahren Folgendes umfasst:
Empfangen (701) einer Sitzungsinitiierungsprotokoll-Anforderung, die einem Anwender (3) zugeordnet ist, von einer Steuerentität (5), **dadurch gekennzeichnet, dass** das Verfahren ferner Folgendes umfasst:
Detektieren (702) einer Angabe, die angibt, dass die bedienende Entität (2) nicht die am meisten bevorzugte bedienende Entität zum Bedienen des Anwenders ist, in der Anforderung, und
Senden (703) einer Angabe, die angibt, dass die bedienende Entität nicht die am meisten bevorzugte bedienende Entität zum Bedienen eines Anwenders ist, an einen Abonnementserver (6), falls die Angabe in der Anforderung detektiert wird.

13. Computerprogrammprodukt, das ein Codemittel umfasst, das zum Erzeugen aller Schritte nach einem der Ansprüche 4, 8, 9 oder 12, wenn es in den Speicher eines Computers geladen wird, ausgelegt ist.

14. Verfahren zum Auswählen einer bedienenden Entität (2), die mit einem Kommunikationssystem verbunden werden kann, wobei das Verfahren Folgendes umfasst:
Auswählen (204) einer bedienenden Entität (2) für einen Anwender (3) durch eine Steuerentität (5), wobei das Auswählen das Auswählen auf der Grundlage von Informationen umfasst, die von einer Abonnemententität (6) empfangen werden, um eine bedienende Entität auszuwählen, **dadurch gekennzeichnet, dass** das Verfahren ferner Folgendes umfasst:
Senden (205) einer Anforderung, die eine Angabe enthält, die angibt, dass die ausgewählte bedienende Entität nicht die am meisten bevorzugte bedienende Entität zum Bedienen des Anwenders ist, von der Steuerentität (5) an die ausgewählte bedienende Entität (2), falls die am meisten bevorzugte bedienende Entität in dem Auswahlschritt nicht ausgewählt wurde,
Detektieren (303) der Angabe, die angibt, dass die ausgewählte bedienende Entität nicht die am meisten bevorzugte bedienende Entität zum Bedienen des Anwenders ist, durch die ausgewählte bedienende Entität (2) in Verbindung mit der Anforderung, die dem Anwender zugeordnet ist, und
Senden (304) einer Angabe, die angibt, dass die ausgewählte bedienende Entität (2) nicht die am meisten bevorzugte bedienende Entität zum Bedienen des Anwenders ist, in Ansprechen auf das Detektieren der Angabe in der Anforderung, von der ausgewählten bedienenden Entität (2) an die Abonnemententität (6).

15. Verfahren nach Anspruch 14, wobei die Informationen zum Auswählen einer bedienenden Entität für den Anwender Serverfähigkeiten umfassen.

## Revendications

1. Une entité d'abonnement (6) comprenant
un moyen de réception (411) d'une entité de service (2) d'une indication indiquant que l'entité de service (2) n'est pas l'entité de service la plus préférée pour servir un utilisateur (3),
un moyen de conservation en mémoire (412) de l'indication, un moyen de réception (413) d'une entité de commande (5) d'une demande associée à l'utilisateur,
un moyen de transmission (414) d'une réponse à la demande, et,
un moyen d'inclusion (415) dans la réponse d'informations destinées à la sélection d'une autre entité de service (2) pour l'utilisateur si l'indication indiquant que l'entité de service (2) n'est pas l'entité de service la plus préférée (2) pour servir l'utilisateur a été conservée en mémoire pour l'utilisateur.

2. L'entité d'abonnement (6) selon la revendication 1, dans laquelle les informations destinées à la sélection d'une entité de service (2) pour l'utilisateur comprennent des capacités de serveur.

3. L'entité d'abonnement (6) selon la revendication 2, dans laquelle les capacités de serveur comprennent une indication de capacités qu'une entité de service (2) à sélectionner pour l'utilisateur doit prendre en charge.

4. Un procédé, exécuté dans une entité d'abonnement (6), destiné à la sélection d'une entité de service (2) dans un système de communication, comprenant
la réception (501), d'une entité de service (2), d'une indication indiquant que l'entité de service n'est pas l'entité de service la plus préférée pour servir un utilisateur,
la mise en mémoire (502) de l'indication,
la réception (503), d'une entité de commande (5), d'une demande associée à l'utilisateur,
la transmission (504) d'une réponse à la demande, et, l'inclusion (505) dans la réponse d'informations destinées à la sélection d'une autre entité de service (2) pour l'utilisateur si l'indication indiquant que l'entité de service n'est pas l'entité de service la plus préférée pour servir l'utilisateur a été conservée en mémoire pour l'utilisateur.

5. Une entité de commande (5) comprenant
un moyen de réception (421) d'une entité d'abonnement (6) d'informations destinées à la sélection d'une entité de service (2) pour un utilisateur (3),
un moyen de sélection (422) d'une entité de service (2) pour l'utilisateur, dans lequel l'opération de sélection comprend une sélection basée sur les informations destinées à la sélection d'une entité de service,
un moyen d'envoi (423) d'une demande (205) à l'entité de service sélectionnée (2), **caractérisée en ce que** l'entité de commande (5) comprend en outre
un moyen d'inclusion (424) dans la demande (505) d'une indication indiquant que l'entité de service sélectionnée (2) n'est pas l'entité de service la plus préférée pour servir l'utilisateur, si l'entité de service la plus préférée n'a pas été sélectionnée par le moyen de sélection (422).

6. L'entité de commande (5) selon la revendication 5, dans laquelle les informations destinées à la sélection d'une entité de service (2) pour l'utilisateur comprennent des capacités de serveur.

7. L'entité de commande (5) selon la revendication 5 ou 6, dans laquelle le moyen de sélection est configuré de façon à déterminer l'entité de service la plus préférée pour l'utilisateur et à sélectionner l'entité de service la plus préférée si celle-ci n'est pas une entité non disponible ou fortement chargée,
et de façon à sélectionner une autre entité de service si l'entité de service la plus préférée n'a pas pu être sélectionnée, et
dans laquelle le moyen d'inclusion est configuré de façon à inclure l'indication indiquant que l'entité de service sélectionnée n'est pas l'entité de service la plus préférée si l'autre entité de service est sélectionnée.

8. Un procédé, exécuté dans une entité de commande (51), destiné à la sélection d'une entité de service dans un système de communication, comprenant
la réception (203, 601), d'une entité d'abonnement (6), d'informations destinées à la sélection d'une entité de service (2) pour un utilisateur,
la sélection (204, 602) d'une entité de service (2) pour l'utilisateur, dans laquelle l'opération de sélection comprend une sélection basée sur les informations destinées à la sélection d'une entité de service,
l'envoi d'une demande (205, 603) à l'entité de service sélectionnée (2), **caractérisé en ce que** le procédé comprend en outre
l'inclusion (604) dans la demande (205) d'une indication indiquant que l'entité de service sélectionnée (2) n'est pas l'entité de service la plus préférée pour servir l'utilisateur si l'entité de service la plus préférée n'a pas été sélectionnée à l'opération de sélection.

9. Le procédé selon la revendication 8, dans lequel la sélection (204, 602) comprend la détermination de l'entité de service la plus préférée (2) pour l'utilisateur et la sélection de l'entité de service la plus préférée si celle-ci n'est pas une entité non disponible ou fortement chargée,
et la sélection d'une autre entité de service (2) si l'entité de service la plus préférée n'a pas pu être sélectionnée, et
dans lequel l'inclusion (604) comprend l'inclusion de l'indication indiquant que l'entité de service sélectionnée n'est pas l'entité de service la plus préférée si l'autre entité de service est sélectionnée.

10. Une entité de service (2) comprenant :
un moyen de réception (431), d'une entité de commande, d'une demande de protocole de démarrage de session associée à un utilisateur (3), **caractérisée en ce que** l'entité de service (2) comprend en outre
un moyen de détection (432) dans la demande d'une indication indiquant que l'entité de service n'est pas l'entité de service la plus préférée pour servir l'utilisateur, et,
un moyen de transmission (433), en cas de détection de l'indication dans la demande, à un serveur d'abonnement (6) d'une indication indiquant que l'entité de service n'est pas l'entité de service la plus préférée pour servir un utilisateur.

11. L'entité de service (2) selon la revendication 10, dans laquelle l'opération de transmission comprend la transmission dans une demande d'attribution de serveur, SAR, d'un signal Diameter.

12. Un procédé, exécuté sur une entité de service (2), destiné à la sélection d'une entité de service (2), comprenant :
la réception (701), d'une entité de commande (5), d'une demande de protocole de démarrage de session associée à un utilisateur (3), **caractérisé en ce que** le procédé comprend en outre
la détection (702), dans la demande, d'une indication indiquant que l'entité de service (2) n'est pas l'entité de service la plus préférée pour servir l'utilisateur, et,
la transmission (703), en cas de détection de l'indication dans la demande, à un serveur d'abonnement (6) d'une indication indiquant que l'entité de service n'est pas l'entité de service la plus préférée pour servir un utilisateur.

13. Un programme informatique comprenant un moyen de code adapté de façon à produire toutes les opérations de l'une quelconque des revendications 4, 8, 9 ou 12 lorsqu'il est chargé dans la mémoire d'un ordinateur.

14. Un procédé destiné à la sélection d'une entité de service (2) pouvant être raccordée à un système de communication comprenant
la sélection (204), par une entité de commande (5), d'une entité de service (2) pour un utilisateur (3), dans laquelle l'opération de sélection comprend une sélection basée sur des informations, reçues d'une entité d'abonnement (6), destinées à la sélection d'une entité de service,
**caractérisé en ce que** le procédé comprend en outre
la transmission (205), de l'entité de commande (5) à l'entité de service sélectionnée (2), d'une demande comprenant une indication indiquant que l'entité de service sélectionnée n'est pas l'entité de service la plus préférée pour servir l'utilisateur, si l'entité de service la plus préférée n'a pas été sélectionnée à l'opération de sélection,
la détection (303), par l'entité de service sélectionnée (2), en relation avec ladite demande associée à l'utilisateur, que l'indication indiquant que l'entité de service sélectionnée n'est pas l'entité de service la plus préférée pour servir l'utilisateur, et
la transmission (304), de l'entité de service sélectionnée (2) à l'entité d'abonnement (6), d'une indication indiquant que l'entité de service sélectionnée (2) n'est pas l'entité de service la plus préférée pour servir l'utilisateur en réponse à ladite détection de l'indication dans ladite demande.

15. Le procédé selon la revendication 14, dans lequel les informations destinées à la sélection d'une entité de service pour l'utilisateur comprennent des capacités de serveur.
